# DEMANDE DE BREVET EUROPEEN

(11) **EP 0 992 975 A1**
(43) Date de publication de la demande: **12.04.2000**
(21) Numéro de dépôt: 99402474.3
(22) Date de dépôt: 08.10.1999
(51) Int. Cl.: G10K 11/168

(54) **Appareil à isolation acoustique et thermique optimisée**

(30) Priorité: 09.10.1998 FR 9812685
(71) Demandeur: ESSWEIN S.A., F-85002 La Roche-sur-Yon (FR)
(72) Inventeur: Gailledrat, Benoit, 94117 Arcueil Cedex (FR)
(74) Mandataire: Chaverneff, Vladimir

(57) **Abrégé**

Le lave-vaisselle de l'invention, à cuve (1) en acier inoxydable et habillage (2), comporte, fixé sur la cuve, un matériau (3) connu pour ses propriétés d'absorption acoustique, et qui est en même temps un isolant thermique. De préférence, ce matériau est du feutre. L'insonorisation peut être complétée par des plaques de bitume (3) disposées sur l'absorbant acoustique.

## Description

La présente invention se rapporte à un appareil à isolation acoustique et thermique optimisée.

La construction actuelle des lave-vaisselle à cuve en acier inoxydable est figée depuis plus de vingt ans en ce qui concerne le traitement acoustique de la cuve à l'aide d'un matériau insonorisant. Ce traitement consiste essentiellement à recouvrir la cuve d'un matériau massif et amortissant (masse surfacique supérieure à environ 2,5 kg par mètre carré de matériau), disponible sous forme de plaques déformables qui sont directement collées à chaud sur les parois extérieures de la cuve. Ce matériau est généralement à base de bitumes (carbures d'hydrogène) et/ou d'élastomères. Il est généralement appelé « bitume ». Un tel apport de masse à la cuve (dont l'épaisseur est d'environ 0,4 à 0,5 mm) permet d'en améliorer l'isolement acoustique. Un tel matériau, ayant des propriétés intrinsèques d'amortissement mécanique, permet d'améliorer la non-transmission des bruits de la cuve, notamment des bruits d'impact des jets d'eau sur ses faces internes.

Dans les machines les plus silencieuses, le traitement acoustique est complété par la fixation, entre le matériau massif collé sur la cuve et l'habillage, de produits absorbant les ondes acoustiques et ayant tous de bonnes propriétés d'isolation thermique. Ces produits sont par exemple des feutres, des mousses de plastique ou d'élastomère, de la laine de verre ou de roche... Ces produits absorbants jouent fortuitement un rôle d'isolation thermique vis-à-vis des pertes thermiques pouvant être occasionnées par les parois de l'habillage du lave-vaisselle. Par contre, le bitume, dont la capacité calorifique est importante (d'environ 20 à 30 % celle de l'eau), suivant les fabricants et les composants utilisés, et qui est en contact intime avec la cuve, absorbe très rapidement des calories communiquées à la cuve par l'eau des bains chauds. Ces calories absorbées le sont en pure perte.

La présente invention a pour objet un appareil, du type à enceinte au moins partiellement métallique dans laquelle se produisent des processus générateurs de sources de bruits transmis par l'enceinte vers l'extérieur de l'enceinte et/ou rendant l'enceinte elle-même source de bruits, ces bruits devant être le moins possible perceptibles de l'extérieur de l'appareil, au moins une partie de ces processus se déroulant à une température supérieure à la température ambiante de l'appareil, les déperditions thermiques correspondantes vers l'extérieur de l'enceinte devant être minimisées, appareil dont l'isolation acoustique de l'enceinte présente de meilleures qualités d'isolation thermique que celle des appareils connus, sans que son isolation acoustique soit sensiblement dégradée.

L'appareil conforme à l'invention comporte un matériau absorbant acoustique et isolant thermique peu dense (densité < 0,2 g/cm³), ayant une masse par unité de surface inférieure à environ 1,5 kg/m² fixé, avantageusement par collage, sur au moins une partie des parois de l'enceinte de l'appareil. Ce matériau comporte avantageusement du feutre. De façon avantageuse, on dispose par-dessus le matériau absorbant acoustique un matériau massique isolant acoustique pour améliorer l'insonorisation de l'appareil. Par isolant thermique, on entend un matériau dont le coefficient de la conduction thermique est inférieur à 0,3 W/m.°C.

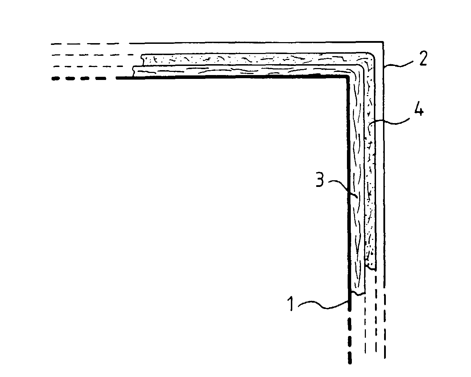

La présente invention sera mieux comprise à la lecture de la description détaillée d'un mode de réalisation, pris à titre d'exemple non limitatif et illustré par le dessin annexé, dont la figure unique est une vue partielle en coupe d'un appareil conforme à l'invention.

L'invention est décrite ci-dessous en référence à un lave-vaisselle, mais il est bien entendu qu'elle n'est pas limitée à ce seul exemple, et qu'elle peut être mise en oeuvre dans d'autres appareils comportant une enceinte, éventuellement revêtue d'un habillage, cette enceinte étant au moins en partie métallique. Les processus mis en oeuvre dans l'enceinte peuvent être divers (traitements mécaniques et/ou chimiques et/ou hydrauliques...). L'invention trouve son intérêt lorsque ces processus génèrent du bruit gênant et lorsqu'au moins une de leurs phases requiert l'apport d'énergie de chauffage.

Les moyens connus d'insonorisation d'un lave-vaisselle ont été élaborés grâce aux enseignements que l'on a tirés de l'étude des phénomènes vibro-acoustiques. Ces moyens comprennent :
1°) Des plaques d'un matériau relativement massif (masse par unité de surface supérieure à 2 kg/m²), ayant des propriétés intrinsèques d'amortissement mécanique (matériau appelé « bitume ») et directement collé sur les parois en acier inoxydable de la cuve,
2°) Un habillage (carrosserie) servant d'enveloppe, plus ou moins étanche à l'air, jouant également le rôle de la deuxième paroi d'une structure à double paroi (cuve-habillage),
3°) Eventuellement, un matériau absorbant acoustique, inséré dans la double paroi, généralement moins massif que le bitume (< 1,5 kg/m²), à densité pouvant avoir des valeurs diverses. L'absorption acoustique se rapporte à la dissipation des ondes acoustiques aériennes.

De tels matériaux ont été employés pour les raisons suivantes :

Pour le point 1: la cuve d'un lave-vaisselle a des parois en matériau à faible masse surfacique (c'est de l'acier inoxydable d'une épaisseur d'environ 0,4 mm) du fait du prix de ce matériau. Ce matériau, peu amorti (propriété des aciers), est de plus une cause prépondérante de bruit. Il en serait de même avec de la matière plastique d'une épaisseur de 3 mm (environ 3 kg/m²), à peine plus amortissante. Les bruits provenant de la cuve ont deux origines : d'une part, les bruits aériens internes à la cuve (émission des jets d'eau des moulinets et bruit d'impact sur la vaisselle), et, d'autre part, les impacts directs des jets d'eau, quasi inévitables, sur les parois de la cuve, qui excitent ces parois et les font vibrer. Ces parois rayonnent donc acoustiquement, de façon très importante, en jouant le rôle « d'amplificateurs », car elles ne présentent pas par elles-mêmes d'amortissement acoustique.

Pour résoudre ce premier problème, l'homme de l'art en est venu tout naturellement à augmenter au moindre coût la masse de la cuve pour « amortir » les bruits. Le « bitume », à lui tout seul, répond idéalement à ces exigences (son prix est environ 4 à 5 fois inférieur à celui de l'acier inoxydable de la cuve, à masse surfacique égale). Pour ces raisons, une telle solution a été adoptée depuis de nombreuses années par les fabricants de lave-vaisselle.

Pour le deuxième point, il faut noter que la plupart des lave-vaisselle comportent un habillage extérieur en tôle, qui est nécessaire structurellement. La solution qui vient aussitôt à l'esprit, afin de capoter acoustiquement la cuve, est de rendre l'habillage le plus hermétique possible.

Pour ce qui est du troisième point, il était évident pour l'homme de l'art que l'insertion d'un matériau absorbant acoustique entre la cuve et l'habillage pouvait améliorer l'insonorisation d'un lave-vaisselle en évitant les réflexions massives d'ondes sonores entre ces deux parois, bien que la fréquence de coupure du « filtre » que constitue la double paroi soit moins favorable en présence d'un matériau inséré plus dense que l'air. En outre, il convient de noter que l'utilisation d'un matériau absorbant acoustique à masse par unité de surface moyenne tel que du feutre (env. 1,2 kg/m²) au lieu d'une laine de verre (4 à 5 fois moins dense) par exemple, produit un isolement acoustique supplémentaire non négligeable.

Par conséquent, l'art antérieur découle d'une application strictement logique des lois de la mécanique vibratoire. Si l'on s'en tient au domaine purement acoustique, et même économique, cet art antérieur peut être considéré comme optimal, si l'on ne désire pas s'attaquer aux sources de bruit (par exemple en évitant les impacts directs des jets d'eau des moulinets sur la cuve). Par contre, comme évoqué ci-dessus, si l'on introduit un autre paramètre, qui est l'énergie consommée par cycle complet de lavage, on est loin de l'optimisation. Cette énergie consommée, pour le chauffage, sert à chauffer l'eau de lavage, la cuve et son enveloppe. Pour ce qui est de l'eau, on ne peut pas descendre au-dessous d'une quantité minimale, et l'épaisseur de la cuve a aussi été réduite à une valeur minimale. Le dernier paramètre sur lequel on puisse agir pour diminuer la quantité d'énergie de chauffage est la masse de l'enveloppe. Traditionnellement, cette enveloppe est en bitume, qui présente une masse surfacique d'environ 4 kg/m². L'invention propose de réduire cette masse en remplaçant le bitume par du feutre, qui présente typiquement une masse surfacique d'environ 1 à 1,4 kg/m², pour une épaisseur d'environ 20 mm (il est donc relativement comprimé). De plus, un tel feutre présente de relativement bonnes propriétés d'absorption acoustique, ce qui lui permet de remplir les objectifs que se fixe l'invention.

L'invention permet d'atteindre cette dernière optimisation de la façon expliquée ci-dessous. On a schématiquement représenté par la figure unique la cuve 1 d'un lave-vaisselle et son habillage 2, qui en est distant de quelques centimètres. On fixe sur les faces extérieures de la cuve une enveloppe 3 en un matériau réputé absorbant acoustique et étant isolant thermique, du feutre en particulier (feutre de coton par exemple).

La fixation de ces plaques est, par exemple, obtenue grâce à une couche mince d'adhésif garnissant leur face destinée à être appliquée sur la cuve. Cet adhésif est avantageusement formé sur les plaques lors de leur fabrication, et est du type à adhésion par contact sous légère pression, à température ambiante.

Bien entendu, tout autre type d'adhésif approprié peut être utilisé, on même tout autre moyen de fixation de ces plaques (fixation par griffes, crochets...). On notera toutefois qu'un autre intérêt d'un feutre fixé par adhésif est de faire dissiper de l'énergie vibratoire par le feutre, qui a une certaine raideur, ainsi qu'un coefficient d'amortissement non négligeable, contrairement à l'acier. Il est également bien entendu que l'enveloppe 3 peut être préformée, ou même formée in situ.

Les plaques constituant l'enveloppe 3 on une masse par unité de surface comprise entre 200 g/m² et 1500 g/m², et typiquement d'environ 1200g/m², et une épaisseur comprise entre 4 et 25 mm environ, et typiquement d'environ 20 mm.

Ainsi, l'invention, allant à l'encontre des préjugés acquis depuis longtemps (au moins 20 ans), utilise, pour remplir deux fonctions (« isolant » acoustique par amortissement et par effet de masse, et isolant thermique), pour lesquelles l'homme de l'art ne le jugeait pas approprié, un matériau qui était considéré jusque-là comme ne pouvant remplir qu'une fonction d'absorbant acoustique, pour laquelle il était utilisé, dans certaines machines, en complément des bitumes (entre ceux-ci et l'habillage).

Ce matériau était, de préférence, un feutre, car il est moins coûteux qu'une mousse et plus hygiénique que la laine de verre. La présente invention propose donc d'utiliser un matériau de ce genre, tout en optimisant ses caractéristiques pour l'adapter au mieux aux deux fonctions précitées. Cette optimisation concerne essentiellement la densité et l'épaisseur des plaques employées.

Selon une autre caractéristique avantageuse de l'invention, et s'il existe un espace d'épaisseur suffisante entre les plaques 3 et l'habillage 2, on y dispose du bitume 4, ou un produit similaire en feuille, afin d'améliorer l'insonorisation du lave-vaisselle, ce bitume ayant alors essentiellement une fonction d'isolant acoustique. Ce dispositif complémentaire d'insonorisation peut par exemple se présenter sous forme de plaques de « bitume » insérées entre les plaques 3 et l'habillage 2, éventuellement fixées à la cuve ou à l'habillage. Ces plaques de bitume peuvent avoir une épaisseur d'environ 2 à 6 mm et une masse par unité de surface d'environ 3 à 10 kg/m².

Selon un exemple de réalisation on a utilisé des plaques 3 de feutre de coton, d'une masse surfacique d'environ 1200 g/m2 et d'une épaisseur d'environ 20 mm, collées sur toute la cuve d'un lave-vaisselle. On a mesuré des gains d'énergie d'environ 200 W.h pour un cycle de lavage complet (lavage-rinçage) par rapport à une machine de l'art antérieur de même type, consommant environ 1700 W.h dans les même conditions.

Selon une variante de l'invention, les plaques 3 et 4 sont formées en une plaque composite unique dont une partie de l'épaisseur est un matériau ayant les mêmes propriétés que le feutre, et l'autre partie est un « bitume ».

## Revendications

1. Appareil à isolation acoustique et thermique optimisée, du type à enceinte au moins partiellement métallique (1), caractérisé par le fait que l'on fixe sur au moins une partie des parois de l'enceinte de l'appareil un matériau absorbant acoustique à base de feutre, présentant une masse par unité de surface comprise entre 200 g/m² et 1500 g/m² et que son épaisseur est comprise entre 4 et 25 mm environ.

2. Appareil selon l'une des revendications précédentes, caractérisé par le fait que le matériau absorbant acoustique est fixé par collage sur l'enceinte.

3. Appareil selon la revendication 1, caractérisé par le fait que le matériau absorbant acoustique est fixé mécaniquement sur l'enceinte.

4. Appareil selon l'une des revendications précédentes, caractérisé par le fait qu'il comporte un matériau isolant acoustique (4) disposé par-dessus le matériau absorbant acoustique.

5. Appareil selon la revendication 4, caractérisé par le fait que le matériau isolant acoustique est du « bitume ».

6. Appareil selon la revendication 4 ou 5, caractérisé par le fait que le matériau absorbant acoustique et le matériau isolant acoustique sont réunis en un matériau composite.

7. Appareil selon l'une des revendications précédentes, caractérisé par le fait qu'il est un lave-vaisselle.
